(19) Europäisches Patentamt
European Patent Office
Office européen des brevets

(11) **EP 4 058 772 B1**

(12) **FASCICULE DE BREVET EUROPEEN**

(45) Date de publication et mention de la délivrance du brevet:
**30.10.2024  Bulletin 2024/44**

(21) Numéro de dépôt: **20861965.0**

(22) Date de dépôt: **13.11.2020**

(51) Classification Internationale des Brevets (IPC):
**G01M 15/14** *(2006.01)*     **G01L 3/10** *(2006.01)*

(52) Classification Coopérative des Brevets (CPC):
**G01M 15/14; G01L 3/109**

(86) Numéro de dépôt international:
**PCT/FR2020/052075**

(87) Numéro de publication internationale:
**WO 2021/094693 (20.05.2021 Gazette 2021/20)**

(54) **PROCEDE DE SURVEILLANCE DE LA TORSION D'UN ARBRE ROTATIF SUR UNE TURBOMACHINE D'UN AERONEF**

VERFAHREN ZUR ÜBERWACHUNG DER TORSION EINER ROTIERENDEN WELLE AN EINER TURBOMASCHINE EINES FLUGZEUGS

METHOD FOR MONITORING THE TORSION OF A ROTARY SHAFT ON A TURBOMACHINE OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **14.11.2019  FR 1912727**

(43) Date de publication de la demande:
**21.09.2022  Bulletin 2022/38**

(73) Titulaire: **SAFRAN AIRCRAFT ENGINES**
**75015 Paris (FR)**

(72) Inventeurs:
• **GARNIER, Alméric Pierre Louis**
**77550 MOISSY-CRAMAYEL (FR)**
• **CUNY, Marion**
**77550 MOISSY-CRAMAYEL (FR)**
• **LHOMMEAU, Tony Alain Roger Joël**
**77550 MOISSY-CRAMAYEL (FR)**
• **FIGEUREU, Claire Marie**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**EP-A2- 1 980 719     FR-A1- 2 995 018**
**FR-A1- 3 071 919**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine Technique**

L'invention concerne le domaine de la surveillance d'un moteur d'aéronef et plus particulièrement, la surveillance de la torsion d'un arbre rotatif sur une turbomachine d'un aéronef avec une localisation d'un éventuel endommagement sur cet arbre.

**Technique antérieure**

La surveillance de torsion d'un arbre rotatif d'un aéronef est classiquement réalisée à partir d'un ou deux capteurs. Un premier capteur est monté à proximité du compresseur basse pression de la turbomachine ou à proximité de la soufflante, et un second capteur, couplé au premier, est monté à proximité de la turbine basse pression.

Cependant, lorsqu'une surveillance de torsion est réalisée à partir de seulement deux capteurs, la surveillance de la torsion d'arbre est réalisable, mais pas la localisation de la dérive (i.e. identifier quel segment d'arbre est en dérive par rapport à l'attendu) bien que l'influence de l'anomalie se propage sur tout l'arbre. La surveillance de l'arbre correspond alors une surveillance globale du comportement en torsion de l'arbre rotatif, en l'occurrence de l'arbre basse pression. Cette surveillance est souvent spécifique à des besoins d'essais.

Il est connu un procédé de contrôle des oscillations de couple dans une chaîne de transmission mécanique d'un système de génération électrique fournissant de l'énergie électrique à un réseau électrique isolé, le procédé comprenant une étape de surveillance des modifications de l'état électrique du réseau électrique.

Il est également connu un procédé et un appareil permettant de surveiller la vitesse de rotation d'un arbre, en particulier d'un arbre ayant un certain nombre de d'éléments espacés ou tournant avec l'arbre, la surveillance étant réalisée à l'aide d'une instrumentation de mesure de la vitesse d'un arbre via l'utilisation d'une roue phonique.

Ces deux procédés utilisent une instrumentation spécifique, de type torsiomètre, pour mesurer la modification du courant en fonction du couple de l'arbre, ou de type roue phonique, ce qui oblige à embarquer sur la turbomachine des capteurs ou éléments spécifiques dédiés uniquement à cet usage. Cela entraîne un encombrement additionnel et une masse supplémentaire sur la turbomachine uniquement pour cet objectif.

Il est aussi connu une turbine à gaz comprenant une section de soufflante comprenant une soufflante pouvant tourner avec un arbre de soufflante, une section de turbomachine comprenant une turbine et un arbre de turbomachine pouvant tourner avec la turbine, une boîte de vitesse de puissance couplée mécaniquement à la fois à l'arbre de soufflante et à l'arbre de turbomachine de telle sorte que l'arbre de soufflante puisse tourner à travers la boîte de vitesse, comprenant un engrenage. La turbomachine comprend en outre un système de surveillance du couple comprenant un capteur de boîte de vitesses et un capteur d'arbre, le capteur de boîte de vitesses pouvant être actionné avec l'engrenage de la transmission de puissance, le capteur d'arbre pouvant être actionné avec au moins l'un des arbre de la turbomachine ou de la soufflante, le système de surveillance du couple déterminant une position angulaire de l'engrenage de la boîte de vitesses par rapport à au moins l'un des arbre de la turbomachine ou de la soufflante en utilisant le capteur de boîte de vitesses et le capteur d'arbre pour déterminer un couple dans le moteur à turbine à gaz.

Ce procédé utilise deux capteurs de position angulaire de l'engrenage, un seul des deux, typiquement un capteur top-tour, étant positionné sur l'arbre, en amont ou en aval de la boîte de vitesse de puissance, pour donner la position angulaire de l'arbre. La variation de la différence de position est relative couple et ne permet que de déterminer s'il existe un endommagement sur l'arbre mais pas de localiser un segment précis de l'arbre sur lequel l'endommagement se situe.

Il est également connu un contrôleur pour un moteur à turbine à gaz configuré pour mesurer une première vitesse de rotation d'un arbre du moteur à une première extrémité de l'arbre et pour mesurer une seconde vitesse de rotation de l'arbre à une seconde extrémité. La première extrémité peut être couplée à une turbine du moteur et la seconde extrémité peut être couplée à un compresseur du moteur. Le contrôleur est en outre configuré pour déterminer un angle de torsion de l'arbre en fonction de la première vitesse de rotation et de la seconde vitesse de rotation, déterminer si l'angle de torsion de l'arbre est dans une plage de surveillance de l'état de santé de l'arbre prédéterminée et enregistrer l'angle de torsion de l'arbre. Le contrôleur peut être configuré pour générer une alerte de maintenance en réponse à la détermination que l'angle de torsion de l'arbre est dans la plage de surveillance de l'état de santé de l'arbre prédéterminée.

Ce procédé connu utilise deux capteurs de vitesse rotation d'un même arbre positionnés aux deux extrémités de l'arbre. La comparaison des vitesses permet de surveiller une torsion de l'arbre, notamment sur des phases transitoires telles que des accélérations ou des décélérations. Cependant, ce procédé utilise également des capteurs dédiés à cette fonction uniquement.

Il est également connu un procédé de détection d'événement de cisaillement d'arbre comprenant une étape consistant à stocker en mémoire une signature d'oscillation d'arbre déterminée en fonction de caractéristiques connues de l'arbre et associée à un événement de cisaillement d'arbre, une étape consistant à surveiller une vitesse de rotation de l'arbre, une étape consistant à détecter à partir de la vitesse de rotation une onde d'oscillation superposée à la vitesse de rotation, l'onde d'oscillation ayant une fréquence de modulation d'ondes et une amplitude de modulation d'ondes, une étape consistant à comparer la signature d'oscillation à l'onde d'oscillation, et une étape consistant à détecter l'événement de cisaillement de l'arbre lorsque l'onde d'oscillation correspond à la signature d'oscillation.

Ce procédé utilise une technique spécifique de surveillance des ondes d'oscillations.

Il est également connu du document EP 2893158, une turbomachine comprenant au moins un arbre axial en rotation dans un carter de turbomachine une partie annulaire de référence comportant une dent longue de référence et une dent courte de référence, des premiers moyens pour détecter le passage des deux dents de référence et mesurer la vitesse de rotation de l'arbre, une partie annulaire de mesure comprenant des dents longitudinales de mesures, et des seconds moyens pour détecter le passage de la dent longue de référence et de la dent de mesure pour mesurer le couple de l'arbre.

Le procédé de surveillance de ce document utilise deux éléments distincts de référence en rotation sur l'arbre pour fournir deux références angulaires sur un même arbre, ce qui ajoute un poids à la turbomachine pour cette surveillance.

En outre, il est connu du document EP 1 980 719 un procédé de surveillance selon le préambule de la revendication 1.

Il est également connu d'autres procédés de surveillance des documents FR 2 995 018 et FR 3 071 919.

**Exposé de l'invention**

La présente invention a pour but de fournir un procédé permettant de surveiller la santé d'un arbre d'une turbomachine à partir d'au moins trois capteurs dont la fonction initiale n'est pas d'être des capteurs tip-timing ni de surveiller la torsion d'arbre.

A cet effet, la présente invention propose un procédé de surveillance de la torsion d'un arbre rotatif sur une turbomachine d'un aéronef à partir des mesures d'au moins trois capteurs répartis le long de l'arbre rotatif pour diviser l'arbre en au moins deux segments d'arbre, le procédé comprenant :

- une étape, pour chaque capteur, de mesure d'un paramètre dépendant de la rotation de l'arbre,
- une étape, pour chaque couple de capteurs réalisable, de calcul d'un paramètre lié à la torsion de l'arbre,
- une étape de comparaison des différents paramètres liés à la torsion de l'arbre calculés à des références,
- une étape de détection d'un endommagement sur un segment d'arbre à l'issue de l'étape de comparaison, et
- une étape d'indication de la localisation de l'endommagement sur l'arbre à partir du segment d'arbre pour lequel un endommagement a été détecté.

Le procédé selon l'invention permet ainsi d'utiliser un ensemble de ces capteurs dont la fonction principale n'est pas de mesurer la torsion de l'arbre. Chaque capteur peut ainsi être de nature différente et mesurer un signal physique de nature différente (émission radiative, champs capacitif, magnétique, résistif ...).

Le procédé selon l'invention permet ainsi d'étendre les capacités de surveillance de la santé de l'arbre d'une turbomachine par l'exploitation d'une turbomachine équipée d'au moins trois capteurs montés à demeure ou modulaires.

Le procédé selon l'invention permet ainsi d'avoir une situation à N capteurs, répartis sur plusieurs plans axiaux le long de l'arbre, découpant alors l'arbre en N-1 segments (espace entre deux capteurs) discret. La combinaison de deux mesures parmi les N permet de générer une surveillance de torsion d'un segment d'arbre reliant un capteur de la première mesure avec le capteur de la seconde mesure : soit la surveillance de 3 segments lorsqu'il y a 3 capteurs. Le procédé selon l'invention offre ainsi la possibilité de générer des surveillances combinatoires de 2 parmi N segments lorsqu'il y a N capteurs.

Les capteurs sont configurés pour mesurer au moins un paramètre lié à la rotation de l'arbre pour ainsi pouvoir remonter à la vitesse angulaire de l'arbre. Ils peuvent par exemple avoir une fonctionnalité de Tip-timing ou de mesure de régime selon la fonction principale de ces derniers, même si cette dernière n'est pas la fonctionnalité visée initiale.

A partir des données reçues par les capteurs, deux surveillances d'arbre peuvent être menées conjointement parmi les suivantes.

Une surveillance du comportement en torsion statique lié au chargement inertiel de l'arbre, car la turbine entraîne le compresseur au travers de l'arbre. Cette surveillance peut consister en une étude d'une dérive du comportement statique attendu sur un segment, en une limitation de la torsion statique admise, en un contrôle de l'arbre suite à une ingestion d'oiseau ou une perte d'aube qui entraîne la génération d'un sur-couple rapide qui peut engendrer des endommagements qui diminueront la durée de vie de l'arbre, ou en une détection d'usure des éléments de liaison entre les différentes parties de l'arbre (par exemple des cannelures)

Une surveillance du comportement dynamique (oscillation autour de la position angulaire statique) qui peut consister en un cumul de temps passé à un niveau vibratoire pour chaque segment, en une détection d'une dérive de comportement, en une présence de deux ou plusieurs plans de mesures permettant de vérifier que le mode à la fréquence observée est bien un mode de torsion. En effet à haute fréquence, il n'est pas rare que plusieurs modes soient observés à la même fréquence. La multiplication des plans permet de filtrer les modes qui ne sont pas des modes de torsion et d'analyser l'amplitude réelle du mode de torsion seul.

Une surveillance d'un arbre à réducteur consistant en un suivi des modes de torsions excité par la présence d'une boîtes à engrenages (mode à haute fréquence, harmonique moteur fois le nombre de dent des engrenages), une détection de l'usure des engrenages, une détection des modes rétrogrades pour laquelle les capteurs doivent être placés de part et d'autres de la boîtes à engrenages.

Ces multiples surveillances sur les multiples segments d'un arbre sont ensuite transformées en une combinaison d'indicateurs de santé permettant d'estimer la sévérité de la dérive de comportement et de la dégradation de santé (mécanique d'un arbre). Ces indicateurs sont ensuite comparés entre eux et agrégés pour permettre la levée d'alerte et après localisation en direction des opérateurs d'inspection et de maintenance.

Le procédé selon l'invention permet ainsi, avec un nombre optimisé de capteurs et de segmentations, de distinguer des modes de vibration d'ordre plus élevé, ainsi que de s'affranchir d'une éventuelle présence d'un noeud au regard d'un capteur, et enfin de segmenter la surveillance en tenant compte de la présence des éventuels réducteurs.

Selon un premier aspect du procédé de surveillance de la torsion d'un arbre rotatif, au moins l'un des capteurs utilisé pour localiser l'endommagement peut être un capteur monté à demeure sur la turbomachine.

En utilisant des capteurs déjà présents sur la turbomachine et dédié à d'autres fonctions que celle de la surveillance de la torsion de l'arbre, on minimise l'encombrement et le poids nécessaire pour une telle surveillance.

Selon un deuxième aspect du procédé de surveillance de la torsion d'un arbre rotatif, le procédé peut comprendre en outre une étape préalable d'installation d'au moins un capteur modulaire autonome amovible, au moins l'un des capteurs utilisés pour localiser l'endommagement étant un capteur modulaire, autonome et amovible.

L'utilisation d'un capteur amovible permet ainsi d'ajouter ponctuellement dans le temps un capteur sur la turbomachine à un endroit en particulier de manière à segmenter la surveillance de l'arbre d'une manière particulière juste le temps d'isoler et de localiser l'éventuel endommagement sur l'arbre.

Dans un autre objet de l'invention, il est proposé un ensemble de surveillance de la torsion d'un arbre rotatif sur une turbomachine d'un aéronef, l'ensemble comprenant :

- au moins trois capteurs de mesure d'un paramètre dépendant de la rotation de l'arbre, lesdits capteurs étant répartis le long de l'arbre rotatif pour diviser l'arbre en au moins deux segments d'arbre,
- des moyens de calcul configurés pour calculer un paramètre lié à la torsion de l'arbre pour chaque couple de capteurs réalisable,
- des moyens de comparaison configurés pour comparer les différents paramètres liés à la torsion de l'arbre calculés à des références,
- des moyens de détection d'un endommagement sur un segment d'arbre à partir des informations transmises par les moyens de comparaison, et
- des moyens d'indication de la localisation de l'endommagement sur l'arbre configurer pour indiquer le segment endommager à partir de l'indication du segment d'arbre pour lequel un endommagement a été détecté par les moyens de détection.

Selon un premier aspect de l'ensemble de surveillance de la torsion d'un arbre rotatif, l'un des capteurs utilisés pour localiser l'endommagement peut être un capteur modulaire et autonome et amovible.

Selon un second aspect de l'ensemble de surveillance de la torsion d'un arbre rotatif, chaque capteur est choisi parmi les capteurs magnétiques, les capteurs acoustiques, les capteurs capacitifs et les capteurs optiques.

Dans un autre objet de l'invention, il est proposé une turbomachine comprenant un ensemble de surveillance de la torsion d'un arbre rotatif telle que définie ci-dessus, la turbomachine comprenant un logement et une trappe d'accès audit logement pour chaque capteur.

Selon un premier aspect de la turbomachine, au moins l'un des capteurs peut être un capteur monté à demeure sur la turbomachine.

Un autre objet de l'invention propose un aéronef comprenant au moins une turbomachine telle que définie ci-dessus.

**Brève description des dessins**

[Fig. 1] La figure 1 présente un logigramme d'un procédé de surveillance de la torsion d'un arbre rotatif d'une turbomachine d'aéronef selon un mode de mise en oeuvre de l'invention.

[Fig. 2] La figure 2 illustre un exemple de segmentation de la surveillance d'un arbre rotatif selon un mode de réalisation de l'invention.

[Fig. 3] La figure 3 représente schématiquement un exemple d'un capteur destiné à être installé temporairement sur une turbomachine pour réaliser une surveillance de la torsion ainsi qu'une autre fonction.

[Fig. 4] La figure 4 illustre schématiquement une turbomachine selon un mode de réalisation de l'invention sur laquelle illustrée schématiquement une turbomachine 10 selon un mode de réalisation de l'invention sur laquelle sont monté des capteurs à résidence et un ensemble modulaire et autonome de détection de la position angulaire des aubes d'une roue à aubes de la figure 3.

[Fig. 5] La figure 5 illustre de manière schématique un ensemble de détection d'un endommagement pour des aubes mobiles d'une roue aubagée d'une turbomachine d'aéronef présentant une première configuration.

[Fig. 6] La figure 6 illustre de manière schématique un ensemble de détection d'un endommagement pour des aubes mobiles d'une roue aubagée d'une turbomachine d'aéronef présentant une seconde configuration.

[Fig. 7] La figure 7 présente un logigramme d'un procédé de détection de la position angulaire des aubes d'une roue à aubes d'une turbomachine.

[Fig. 8] La figure 8 présente un logigramme d'un procédé de détection d'un endommagement d'une ou plusieurs aubes mobiles constitutives d'une roue à aubes d'un moteur d'aéronef, le procédé comprenant une détection de la position angulaire des aubes d'une roue selon un mode de mise en oeuvre de l'invention.

## Description des modes de réalisation

L'invention s'applique d'une manière générale dans le cadre de services de maintenance prédictive réalisés par un fabricant de moteurs d'aéronefs.

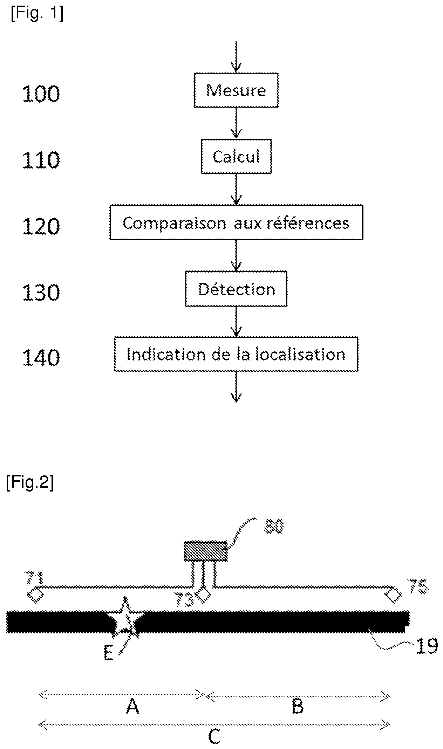

Sur la figure 1 est illustré un logigramme d'un procédé de surveillance de la torsion d'un arbre rotatif d'une turbomachine d'aéronef selon un mode de mise en oeuvre de l'invention.

Le procédé de surveillance comprend une première étape 100 dans laquelle chaque capteur mesure un paramètre dépendant de la rotation de l'arbre.

Dans une étape suivante 110, on constitue des couples de mesures, chaque mesure étant couplée avec les mesures des autres capteurs, et on calcul pour chaque couple un paramètre lié à la torsion de l'arbre. Pour N capteurs, on pourra ainsi former un nombre égal à N(N-1)/2.

Dans une étape suivante 120, on compare les différents paramètres liés à la torsion de l'arbre calculés à l'étape 110 à des références correspondantes.

Dans une étape suivante 130, on détecte s'il existe un endommagement sur un segment d'arbre à partir des résultats de l'étape 120 de comparaison.

Enfin, si un segment est détecté comme endommage, on indique, dans une étape suivante 140, la localisation de l'endommagement sur l'arbre à partir du segment d'arbre pour lequel un endommagement a été détecté à l'étape 130.

Sur la figure 2 est illustré un exemple de segmentation de la surveillance d'un arbre rotatif 19 à partir d'un premier capteur monté en regard d'une première extrémité de l'arbre 19, d'un deuxième capteur 73 monté entre les deux extrémités de l'arbre 19, et d'un troisième capteur 75 monté en regard de la seconde extrémité de l'arbre 19. Les trois capteurs 71, 73, et 75 sont couplés à un boîtier principal 80 configuré pour réaliser les calculs du procédé.

Les trois capteurs 71, 73, 75 forme trois segments. Un premier segment A s'étendant entre le premier capteur 71 et le deuxième capteur 73, un deuxième segment B s'étendant entre le deuxième capteur 73 et le troisième capteur 75, et un troisième segment C s'étendant entre la premier capteur 71 et le troisième capteur 75. Le troisième segment C a donc une longueur égale à la somme des premier et deuxième segments A et B. L'ajout d'un capteur par rapport à une configuration à deux capteurs permet ainsi de passer d'une unique mesure de couple à trois mesures de couples.

Avantageusement la comparaison des trois mesures par rapport à des références permet d'identifier le segment le plus en dérive (statique ou dynamique) par rapport à l'attendu et donc d'orienter les inspections dans ce sens. C'est la localisation de l'endommagement (E) : la dérive se concentre sur le premier segment A et non plus sur le grand segment C.

Les segments sont déterminés par le nombre de capteurs disponibles, comme par exemple le nombre de capteurs disponibles pour la réalisation d'une mesure de la position angulaire d'un élément de l'arbre (comparaison des temps de passage d'un élément particulier). Le positionnement des capteurs pour réaliser la discrétisation de l'arbre est cohérent avec la variation de la forme et/ou du module de Young selon la conception et fabrication des arbres à l'état nominal.

Le procédé s'adapte à différentes architectures de turbomachine ce qui permet de réaliser une surveillance de la torsion de l'arbre en minimisant l'impact d'intégration sur la turbomachine.

Dans une configuration, il est possible d'utiliser uniquement des données de capteurs d'un premier jeu de capteurs installés à demeure sur la turbomachine pour des missions autres. Dans une autre configuration, il est possible d'utiliser en plus des données issues du premier jeu de capteurs, des données de capteurs d'un deuxième jeu de capteurs installés temporairement pour réaliser la surveillance de torsion et/ou d'autres missions.

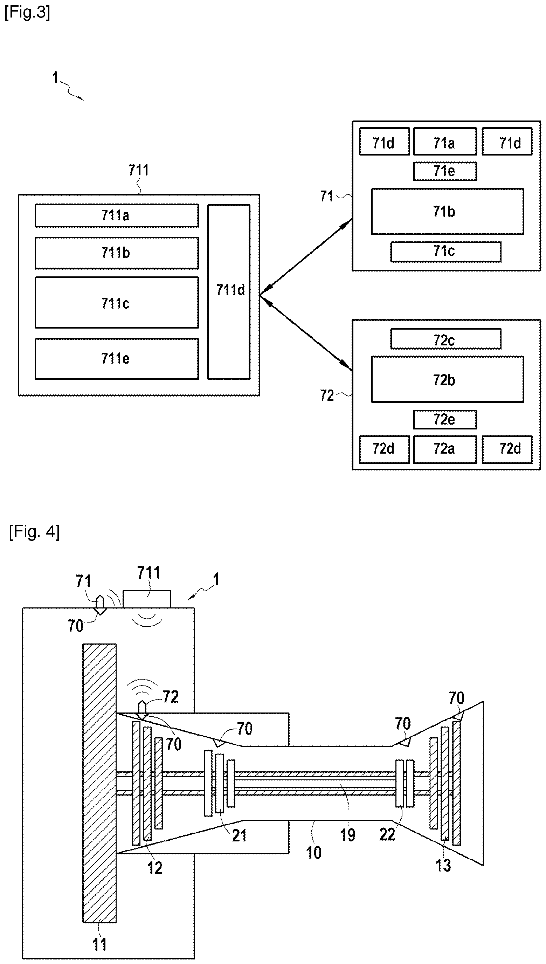

Sur la figure 3 est représenté schématiquement un exemple d'un capteur destiné à être installé temporairement sur une turbomachine pour réaliser une surveillance de la torsion ainsi qu'une autre fonction.

Le capteur se présente sous la forme d'un ensemble 1 modulaire et autonome de détection de la position angulaire des aubes d'une roue à aubes, l'ensemble 1 de détection étant destiné à être monté sur une turbomachine 10. L'ensemble 1 a donc pour fonction première la détection de la position angulaire des aubes d'une roue à aubes, et est utilisé en outre pour réaliser une surveillance de la torsion de l'arbre de la turbomachine.

Dans le mode de réalisation illustré sur la figure 3, l'ensemble, ou kit, modulaire et autonome de détection 1 comprend un boîtier principal 711, un premier capteur 71, qui peut être identique au premier capteur 71 de la figure 2, et un second capteur 72. Dans une variante, l'ensemble pourrait comprendre plus de deux capteurs.

Le boîtier principal 711, qui peut être confondu avec le boîtier principal 80 de la figure 2, comprend une unité de communication 711a, une batterie principale d'alimentation 711b, une unité de mémorisation 711c, deux clips de fixation manuelle réversible 711d et une unité de traitement principale 711e.

Une partie de l'unité de mémorisation 711c est une mémoire vive de type RAM dédiée au calcul et une autre partie de l'unité de mémorisation 711c est une mémoire morte de type NVRAM pour le stockage des résultats et des paramètres de configuration de l'unité de traitement principale 711e telle qu'un processeur.

Les clips de fixation manuelle réversible permettent de fixer le boîtier principal 711 sur une turbomachine 10 sans utilisation d'outil et de manière facilement amovible. Les clips de fixation 711d sont des fixations physiques multipoint pour raccord mécanique à une turbomachine 10.

Chaque capteur 71 et 72 comprend un module de détection, respectivement noté 71a et 72a, tel qu'un capteur Tip-timing de type capacitif, optique, inductif, ou à pression par exemple, une batterie locale, notée respectivement 71b et 72b, un module de communication, noté respectivement 71c et 72c, permettant de communiquer avec l'unité de communication 711a du boîtier principal 71, deux clips de fixation manuelle réversible, notés respectivement 71d et 72d, et une unité de traitement locale, notée respectivement 71e et 72e, telle qu'un processeur.

Les clips de fixation manuelle réversible 71d ou 72d permettent de fixer le capteur 71 ou 72 sur une turbomachine 10 sans utiliser d'outil et de manière facilement amovible. Les clips de fixation 71d ou 72d sont des fixations physiques multipoint pour raccord mécanique à une turbomachine 10.

L'information captée par le module de détection 71a ou 72a du capteur 71 ou 72 est délivrée à l'unité de traitement locale 71e ou 72e qui prépare le signal avant son émission par le module de communication 71c ou 72c vers l'unité de communication 711a du boîtier principal 711. Le processeur local 71e ou 72e est capable de transformer les informations brutes acquises à plusieurs dizaines de kHz en provenance du module de détection 71a ou 72a en un signal transmissible (numérisation, compression, prétraitement, détection de passage d'aube).

Dans le mode de réalisation illustré sur la figure 3, le module de communication 71c ou 72c des capteurs 71 et 72 est adapté à la transmission et réception d'information sans fil, et l'unité de communication 711a du boîtier principal 711 est configurée et adaptée pour recevoir les informations transmises via un réseau de communication sans fil.

Dans une variante, l'ensemble de détection 1 peut comprendre une seule source d'alimentation, telle qu'une batterie, localisée dans le boîtier principal 711 et alimentant en énergie électrique les capteurs 71 et 72 via une liaison filaire.

Sur la figure 4 est illustrée schématiquement une turbomachine 10 selon un mode de réalisation de l'invention sur laquelle sont montés des capteurs à résidence et un ensemble modulaire et autonome de détection de la position angulaire des aubes d'une roue à aubes de la figure 3.

Sur le mode de réalisation illustré sur la figure 4, un kit 1 de détection comprenant seulement un premier capteur 71 et un second capteur 72 sont montés sur une turbomachine 10. Le premier capteur 71 est monté sur la nacelle de la turbomachine 10 en regard de la soufflante 11 pour lui permettre de réaliser une surveillance de la santé de l'aubage de la soufflante 11. Le second capteur 72 est monté sur la nacelle de la turbomachine 10 en regard de l'aubage 12 de l'étage du compresseur basse pression. Le boîtier principal 711 est quant à lui monté sur le carter de la soufflante de la turbomachine 10 sur une zone à basse température.

Le premier capteur 71 et le second capteur 72 sont installés sur la turbomachine dans des logements 70 prévus à cet effet et dotés d'une trappe d'accès depuis la nacelle permettant d'ouvrir et de fermer facilement l'accès aux logements pour monter ou démonter les capteurs 71 et 72.

Le boîtier principal 711 peut également être logé dans un emplacement prévu à cet effet avec une trappe d'accès dédiée. La trappe d'accès peut également être communalisée avec un logement dédié à la réception d'un autre élément de la turbomachine, comme une trappe d'accès à l'huile.

Dans le mode de réalisation illustré sur la figure 4, la turbomachine 10 comprend trois autres emplacements 70 prévus pour recevoir des capteurs similaires aux premier et second capteurs 71 et 72 ou bien d'autres capteurs, ces logements pouvant être pour des capteurs amovibles ou bien pour des capteurs destinés à rester à résidence sur la turbomachine 10.

Le premier et le second des trois autres emplacements 70, qui sont libres sur la figure 4, sont localisés à l'arrière de la turbomachine 10, pour l'un, en regard l'étage 13 de la turbine basse pression et, pour l'autre, en regard de l'étage 22 de la turbine haute pression. Le troisième des trois autres emplacements 70 libres est localisé sur la nacelle de la turbomachine 10 en regard de l'étage 21 du compresseur haute pression.

Grâce à ces emplacements 70, il serait possible, dans une autre configuration d'avoir deux autres capteurs positionnés pour surveiller l'étage 21 du compresseur haute pression et l'étage 22 de la turbine haute pression qui sont couplés par l'arbre de transmission 19.

Dans une configuration où la turbomachine comprendrait un réducteur entre la soufflante 11 et le compresseur basse pression 12, et/ou un réducteur entre la turbine haute pression 22 et la turbine basse pression 13, la turbomachine pourrait également comprendre des emplacements 70 pour recevoir des capteurs au niveau des réducteurs.

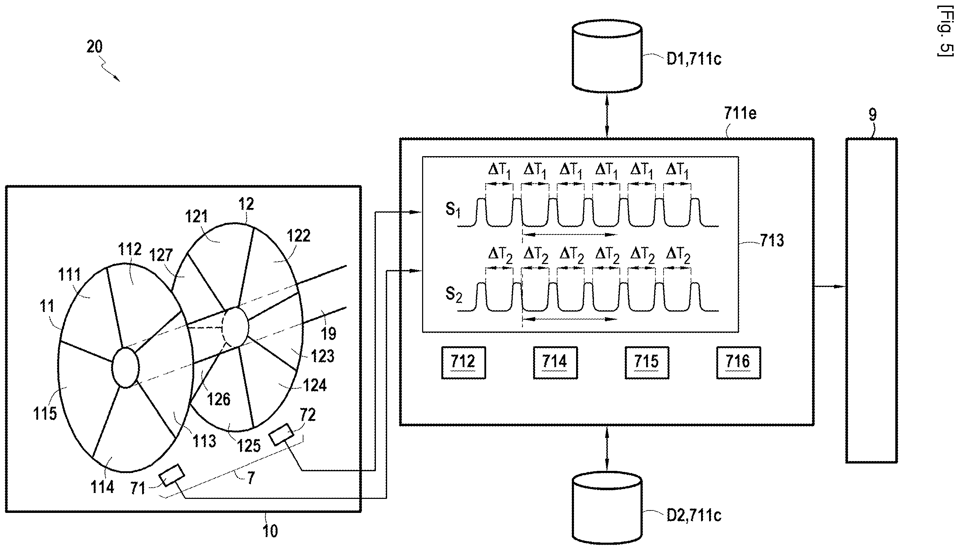

Sur la figure 5 illustre de manière schématique un ensemble 20 de détection d'un endommagement pour des aubes mobiles d'une roue aubagée 11, ou roue à aubes, d'une turbomachine 10 d'aéronef présentant une première configuration.

L'ensemble 20 de détection d'un endommagement comprend le kit 1 de détection de la position des aubes d'une roue à aubes de la figure 5 et des moyens d'alertes 9.

Pour améliorer la lisibilité de la figure 5, tous les éléments du kit 1 n'ont pas été représentés. Le kit 1 comprend bien tous les éléments décrits sur la figure 3, à savoir, un boîtier principal 711 comportant notamment l'unité de traitement principale 711e et une unité de mémorisation 711c sous la forme d'une ou plusieurs bases de données D1, D2, un premier capteur 71 et un second capteur 72.

En plus d'être utilisé pour la détection du Top-Tour, le premier capteur 71 et le second capteur 72 de l'ensemble 1 de détection de la position des aubes forment également des moyens d'acquisition 7 de données de l'ensemble 20 de détection d'endommagement.

Lorsque le kit 1 de détection de la position des aubes est intégré dans un ensemble 20 de détection d'un endommagement, l'unité de traitement principale 711e comprend des moyens supplémentaires pour réaliser la détection d'un endommagement. L'unité de traitement principale est configurée ainsi pour exécuter un programme d'ordinateur comprenant des instructions de code conçues pour mettre en oeuvre un algorithme d'acquisition, de traitement de signal, d'analyse, et d'alerte selon le procédé de détection d'endommagement de l'invention.

Les moyens d'acquisition 7 sont configurés pour acquérir un signal temporel $S_1$ relatif à des aubes 111 à 115 mobiles d'une roue aubagée 11, par exemple la roue aubagée de la soufflante (Fan) ou de toute autre roue aubagée du moteur 10.

Avantageusement, les moyens d'acquisition 7 utilisent une technique de « tip-timing » pour mesurer les temps/instants de passage TOA (« Time Of Arrival ») des aubes 111 à 115 mobiles.

Comme indiqué sur la figure 4, le premier capteur 71 des moyens d'acquisition 7, qui est un capteur tip-timing, est installé sur le carter du moteur 10 au droit de la roue aubagée 11 de la soufflante de sorte à acquérir un signal temporel $S_1$ propre au premier capteur 71.

Plus particulièrement, un capteur tip-timing 71 détecte et compte les passages des sommets des aubes 111 à 115 par rapport à une base de temps. Ainsi, un capteur tip-timing 71 peut mesurer le temps de passage courant entre les aubes 111 à 115 par rapport à un point de référence, aussi appelé « top-tour ». Pour un capteur tip-timing 71, les temps de passage (TOA) propres à chaque aube 111 à 115 peuvent ensuite être déduits des données mesurées par l'unité de traitement principale 711e, ici via un module de calcul 713 interne à l'unité de traitement principale 711e.

En d'autres termes, un capteur tip-timing 71 permet d'acquérir des mesures relatives aux temps/instants de passage du sommet de chaque aube 111 à 115 mobile au droit d'une zone de référence de la roue aubagée 11. Par ailleurs, dans le cas où plusieurs capteurs 71 sont utilisés sur une même roue à aubes, il est possible, afin de limiter les risques de pertes des capteurs tip-timing 71, de positionner les capteurs 71 de manière à maximiser leur distance azimutale, afin de les éloigner au maximum les uns des autres. Ainsi, en cas de défaillance locale d'un capteur 71 (ex : impact d'un débris sur une aube 111, encrassement d'un capteur 71) on minimise le risque que l'ensemble des capteurs 71 soient affectés.

En fonctionnement normal, les aubes 111 à 115 vont passer devant un même capteur tip-timing 71 de manière régulière. A un régime donné, on mesurera donc, pour un capteur 71, un intervalle de temps Δt entre le passage de deux aubes consécutives.

A l'inverse, l'altération de l'état d'une aube, due par exemple à une usure ou à l'ingestion d'un corps étranger FOD (« Foreign Object Damage »), peut se traduire par une modification de la position de l'aube au moment où celle-ci passe devant au moins un des capteurs 71.

Afin de pouvoir identifier chaque aube 111 à 115, indépendamment de leur état, l'unité de traitement principale 711e est configurée pour analyser les différents signaux temporels $S_1$ par rapport à une référence angulaire.

La référence angulaire est fournie, dans ce mode de réalisation par le kit 1 de détection d'un « top-tour » de la figure 5, ce qui permet notamment d'éviter d'utiliser une roue phonique.

L'ensemble 1 de détection d'un « top-tour » est configuré pour détecter la position angulaire relative des aubes d'une première roue à aubes, telle que la roue à aubes 11 de la soufflante dont l'endommagement des aubes est surveillé à l'aide du premier capteur 71, et d'une seconde roue à aubes 12, la première et la seconde roues à aubes 11 et 12 étant traversées par un même flux d'air et, dans le mode de réalisation illustré sur la figure 5, entraînées par un même arbre 19 de la turbomachine 10.

L'endommagement des aubes de la seconde roue à aubes 12 peut être surveillé également de la même manière que pour la première roue à aubes 11 à l'aide d'autres capteurs tip-timing montés en regard de la seconde roue 12, tels que le second capteur 72.

La première roue 11 comprend un premier nombre d'aubes $N_1$ et la seconde roue 12 comprend un second nombre d'aubes $N_2$, le premier nombre d'aubes $N_1$ de la première roue à aubes 11 et le second nombre d'aubes $N_2$ de la seconde roue à aubes 12 étant distincts et ne présentant aucun diviseur commun. Le premier et le second nombre d'aubes $N_1$ et $N_2$ sont donc premiers entre eux. Les aubes sont réparties régulièrement sur chacune des roues à aubes 11 et 12. Ainsi, sur une même roue à aubes 11 ou 12 deux aubes adjacentes sont séparées d'un même intervalle angulaire.

Les premier et second capteurs 71 et 72 sont synchronisés temporellement sur une même horloge et sont configurés pour générer un signal à chaque passage d'une aube de la première ou seconde roue à aubes 11 ou 12 devant le capteur correspondant 71 ou 72.

L'unité de traitement principale 711e du kit de détection 1 est configurée pour déterminer l'intervalle de temps séparant la détection d'une aube de la première roue à aubes 11 avec la détection de chacune des aubes de la seconde roue à aubes 12.

Le premier capteur 71 embarqué renvoie un premier signal temporel $S_1$ à chaque fois qu'une aube de la première roue à aubes 11 passe devant. Le second capteur 72 embarqué renvoie un second signal temporel $S_2$ à chaque fois qu'une aube de la seconde roue à aubes 12 passe devant. L'intervalle de temps entre chaque détection, $\Delta T1$ pour la première roue à aubes 11 et $\Delta T2$ pour la seconde roue à aubes 12, dépend de la vitesse de rotation de l'arbre 19 et du nombre respectif d'aubes sur la roue à aubes 11 ou 12.

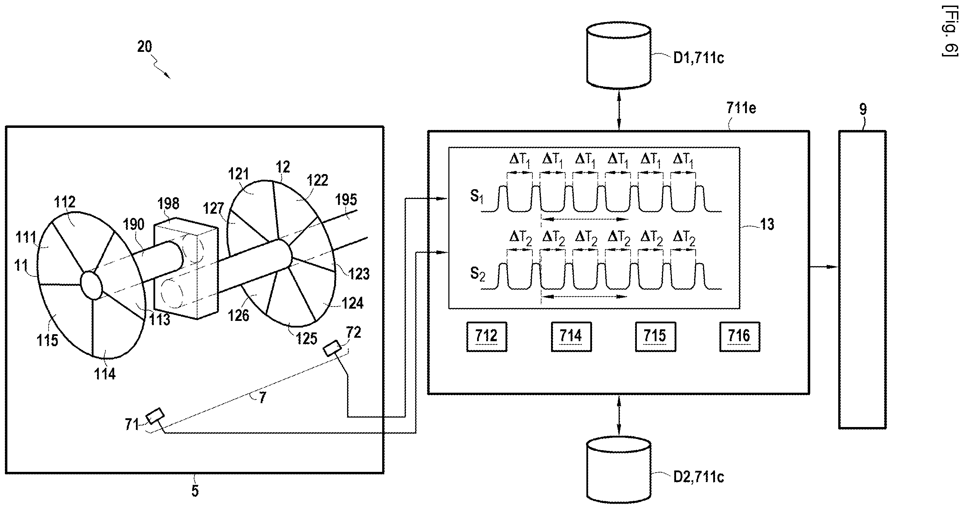

La figure 6 illustre de manière schématique un ensemble 20 de détection d'un endommagement pour des aubes mobiles d'une roue à aubes 11 d'une turbomachine 10 d'aéronef présentant une seconde configuration.

La seconde configuration de la turbomachine 10 illustrée sur la figure 6 diffère de la première configuration de la turbomachine 10 illustrée sur la figure 5 en ce que la première et seconde roues à aubes 11 et 12 sont traversées chacune par un flux d'air qui peut ne pas être le même et sont entraînées par deux arbres distincts 190 et 195 raccordés l'un à l'autre par un réducteur 198.

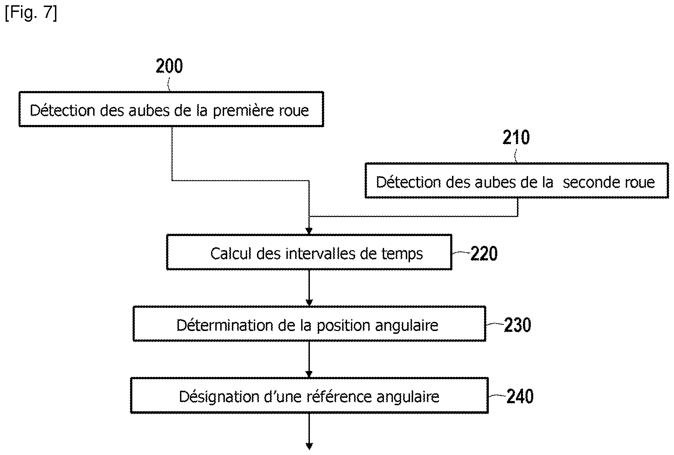

Sur la figure 7 est présenté un organigramme d'un procédé de détection de la position angulaire des aubes d'une roue à aubes d'une turbomachine selon un mode de mise en oeuvre de l'invention. L'ensemble 1 de détection d'un top-tour peut mettre en oeuvre ce procédé pour détecter le top-tour.

Le procédé comprend une première étape 200 dans laquelle le premier capteur 71 détecte le passage de chaque aube 111 à 115 de la première roue à aubes 11.

Dans le même temps, dans une seconde étape 210, le second capteur 72 détecte le passage de chaque aube 121 à 127 de la seconde roue 12.

Un disque fait $2\pi$ radians. Aussi en faisant le lien avec la vitesse de rotation de l'arbre, on a 1 tour / min = $2\pi/60$ rad.s$^{-1}$.

Pour une vitesse de rotation fixe, notée RPM ci-dessous, l'intervalle de temps séparant le passage de deux aubes successives d'une même roue à aubes possédant un nombre N d'aubes devant un capteur associé à la roue à aubes se détermine par l'équation suivante :

[Math. 1]

$$\Delta t = \frac{60}{2\pi * RPM} * \frac{1}{N}$$

Pour la première roue à aubes 11 et le premier capteur 71 dédié à son regard, on a donc :

[Math. 2]

$$\Delta t_1 = \frac{60}{2\pi * RPM} * \frac{1}{N_1}$$

Et pour la seconde roue à aubes 12 et le second capteur 72 dédié à son regard, on a donc :

[Math. 3]

$$\Delta t_2 = \frac{60}{2\pi * RPM} * \frac{1}{N_2}$$

Les premiers et seconds capteurs n'auront donc pas le même nombre de détections de passage d'aubes dans un même tour d'arbre.

Dans les modes de réalisation illustrés sur les figures 3 et 4, la première roue à aubes 11 comprend cinq aubes, soit $N_1=5$, référencées 111 à 115, et la seconde roue à aubes 12 comprend 7 aubes, soit $N_2=7$, référencées 121 à 127. Pour faciliter les calculs, on considère une vitesse de l'arbre égale à $60/2\pi$ tours par minute, soit RPM=$60/2\pi$ rpm.

Avec ces caractéristiques et en considérant que les capteurs ont la même position angulaire pour simplifier, on obtient le relevé des temps de passages des aubes suivants à l'issue de la première étape 200 et de la seconde étape 210 :

[Table 1]

| Premier capteur 71 | Second capteur 72 |
|---|---|
| 0.100 | 0.050 |
| 0.300 | 0.192 |
| 0.500 | 0.335 |
| 0.700 | 0.478 |
| 0.900 | 0.621 |
| 1.100 | 0.764 |
| 1.300 | 0.907 |

Il est important de noter que les aubes ne sont pas forcément initialement au regard du capteur, ce qui introduit un délai avant la première détection.

Dans une troisième étape 220, l'unité de traitement principale 711e calcule l'intervalle de temps $\Delta t$ séparant le passage d'une aube de la première aube 11 de chacune des aubes 121 à 127 de la seconde roue 12.

Si on compare, dans le premier mode de réalisation illustré sur la figure 5 où les deux roues à aubes 11 et 12 sont entraînée par un même arbre 19, le temps d'arrivée des aubes 111 à 115 de la première roue à aubes 11 avec le temps d'arrivée des aubes 121 à 127 de la seconde roue à aubes 12, on obtient cette matrice :

[Table 2]

| $\Delta T$ | 111 | 112 | 113 | 114 | 115 |
|---|---|---|---|---|---|
| 121 (tour 1) | 0.05 | 0.25 | 0.45 | 0.65 | 0.85 |
| 122 | -0.092 | 0.107 | 0.307 | 0.507 | 0.707 |
| 123 | -0.235 | -0.035 | 0.164 | 0.364 | 0.564 |
| 124 | -0.378 | -0.178 | 0.021 | 0.221 | 0.421 |
| 125 | -0.521 | -0.321 | -0.121 | 0.078 | 0.278 |
| 126 | -0.664 | -0.464 | -0.264 | -0.064 | 0.135 |
| 127 | -0.807 | -0.607 | -0.407 | -0.207 | -0.007 |

9

(suite)

| $\Delta T$ | 111 | 112 | 113 | 114 | 115 |
|---|---|---|---|---|---|
| 121 (tour 2) | 0.05 | 0.25 | 0.45 | 0.65 | 0.85 |

Les valeurs de la matrice correspondent à la différence entre le temps d'arrivée temps d'arrivée des aubes 111 à 115 de la première roue à aubes 11 avec le temps d'arrivée des aubes 121 à 127 de la seconde roue à aubes 12, c'est-à-dire aux intervalles de temps notés $\Delta T$.

Dans une variante, le calcul de l'intervalle de temps $\Delta T$ peut prendre en compte le coefficient de réduction du, si présent, dispositif de réduction 198.

Par exemple, dans le second mode de réalisation illustré sur la figure 6, les deux roues à aubes 11 et 12 ne sont pas situées sur un même arbre mais entraînées par deux arbres distincts 190 et 195 couplées ensemble via un dispositif de réduction 198 de facteur $C_{réducteur}$. Pour la première roue à aubes 11 et le premier capteur 71 dédié à son regard, on adonc :

[Math. 4]

$$\Delta t_1 = \frac{60}{2\pi * C_{réducteur} * RPM} * \frac{1}{N_1}$$

Et pour la seconde roue à aubes 12 et le second capteur 72 dédié à son regard, on a donc :

[Math. 5]

$$\Delta t_2 = \frac{60}{2\pi * RPM} * \frac{1}{N_2}$$

Si on réalise une comparaison semblable dans le second mode de réalisation, mais cette fois-ci en calculant la différence entre un premier temps correspondant au produit entre le facteur $C_{réducteur}$ et le temps d'arrivée des aubes 111 à 115 de la première roue à aubes 11 et un second temps correspondant au temps d'arrivée des aubes 121 à 127 de la seconde roue à aubes 12, on obtient la même matrice qu'indiquée dans le tableau dénommé Table 2.

La table matricielle offre ainsi autant de références angulaires que souhaitées. Comme indiqué dans la table matricielle, les aubes d'une roue à l'autre ne sont pas nécessairement alignées n'ont plus. Si deux roues à aubes sont alignées de manière à avoir une aube de chaque roue à aubes alignée alignées ensemble, on aurait une case du tableau pour laquelle la différence serait nulle.

Une telle base de données peut alors être exploitée par un algorithme.

Dans une variante, le calcul de l'intervalle de temps $\Delta T$ peut être normalisé par rapport à la vitesse de rotation de l'arbre 19 entraînant les deux roues à aubes 11 et 12 de sorte que le calcul soit indépendant de la vitesse de rotation.

Ensuite, dans une quatrième étape 230, l'unité de traitement principale 711e détermine la position angulaire relative de chaque aube 111 à 115 de la première aube 11 par rapport à la position angulaire des aubes 121 à 127 de la seconde roue 12 à partir des valeurs des intervalles $\Delta T$ et à la valeur du régime des premières et secondes roues à aubes 11 et 12.

Dans l'exemple illustré sur les figures 1 et 2 et les tableaux ci-dessus, ce sont les deux dernières aubes 115 et 127 à être détectées pour la fin d'un tour qui présentent l'écart temporel $\Delta t$ le plus petit. Mais ce résultat reste aléatoire car il est lié à l'offset de décalage de la première détection. La différence d'offset entre les deux roues à aubes 11 et 12 sera liée quant à elle au montage des première et seconde roues à aubes 11 et 12 sur l'arbre 19, et à la position angulaire des premier et second capteurs 71 et 72. Cet offset relève donc de la production et de l'assemblage de la turbomachine 10.

Avec un alignement des premier et second capteurs 71 et 72 à la même référence angulaire, l'offset est uniquement lié à l'assemblage des roues à aubes 11 et 12 sur l'arbre 19 et à leur alignement relatif.

Cet offset est caractéristique de la turbomachine 10, et l'alignement résultant entre les aubes d'une roue à aubes à l'autre est inhérent à la turbomachine 10. Cet alignement, ici est présenté relativement au temps de passage des aubes au regard d'un capteur Tip Timing, qui est finalement la signature temporelle de cet alignement des aubes.

Enfin, dans une cinquième étape 240, l'unité de traitement principale 711e désigne comme référence angulaire, c'est-à-dire comme top-tour, l'aube de la première roue à aubes 11 présentant l'écart temporel $\Delta t$ le plus petit avec une aube de la seconde roue à aubes 12.

Comme mentionné ci-dessus, la cinquième aube 115 de la première roue à aubes 11 et la septième aube 127 de la seconde roue à aubes 12 sont les plus alignées.

Cette particularité d'alignement permet de décider de manière arbitraire, que la cinquième aube 115 de la première roue à aubes 11 sera considérée comme le Top Tour, c'est-à-dire comme la référence angulaire. Une autre aube de la première roue aubes 11 aurait pu être désignée arbitrairement comme le top-tour basé sur l'analyse du tableau matriciel ci-dessus.

L'alignement des aubes d'une roue à aubes à l'autre reste identique, car il est lié à l'assemblage, et au nombre d'aubes respectives des roues à aubes. L'identification du top-tour ne nécessite qu'un tour pour être identifié par l'algorithme déployé.

Ainsi, à chaque vol de l'aéronef comprenant une turbomachine 10, le premier tour du moteur 10 permet de reconstituer le Top-Tour. Ensuite chaque détection de l'aube choisie comme top-tour donnera la référence temporelle, au sens du tip-timing, et angulaire du top-tour.

Le système 20 de détection d'endommagement d'une aube cherche à détecter une dégradation durable des performances d'une ou plusieurs aubes 111 à 115 liée à un endommagement, et non pas une simple perturbation temporaire observable sur le signal S1. Ainsi, la référence angulaire (top tour T12) décrite ci-dessus est uniquement utilisée pour identifier chacune des aubes 111 à 115 par rapport aux autres. La détection de l'endommagement d'une aube, qui sera décrite par la suite, ne consiste donc pas ici en la simple observation ou détection de la variation de l'intervalle $\Delta t$ entre les impulsions mesurées entre les aubes 111 par chaque capteur tip-timing 71.

Au moins un capteur tip-timing 71 peut être utilisé pour mesurer le régime du moteur 10 de l'aéronef.

Chaque capteur tip-timing 71 peut être de type capacitif, inductif, à courants de Foucault, ou encore une sonde optique ces différents types de capteurs étant robustes, précis et peu encombrants.

Un exemple de mise en oeuvre d'un procédé de détection de l'endommagement d'une ou plusieurs aubes 111 mobiles constitutives de la roue aubagée mis en oeuvre par l'ensemble 20 de détection d'endommagement est maintenant décrit.

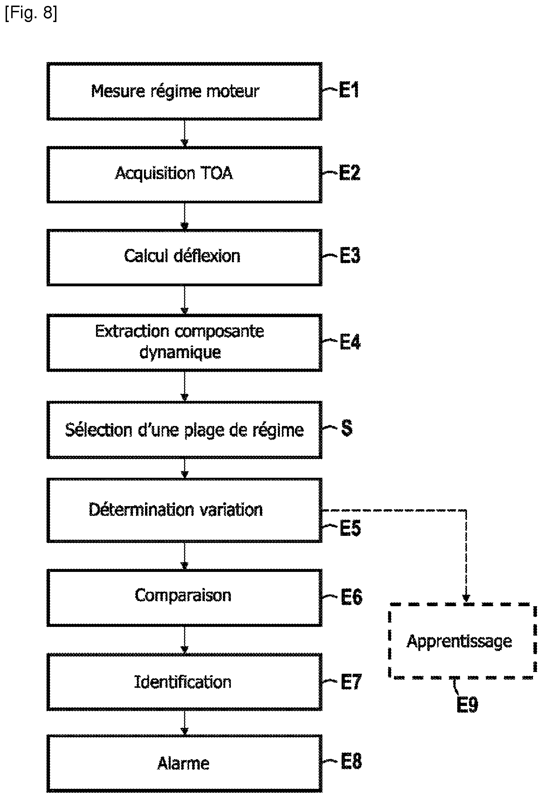

Comme illustré sur la Figure 8, ce procédé comprend une étape de mesure E1 du régime du moteur 10 réalisée par les moyens d'acquisition 7. Comme expliqué ci-dessus, la mesure du régime du moteur 10 peut être réalisée par un capteur tip-timing 71.

Parallèlement, le capteur tip-timing 71 ou 72 d'une roue à aubes 11 ou 12 effectue des mesures relatives aux temps/instants de passage du sommet de chaque aube mobile au droit du capteur. Les moyens de traitement 11 effectuent alors un conditionnement des mesures issues du capteur tip-timing 71 ou 72. Ce conditionnement consiste à identifier en temps réel chaque aube dans le signal temporel mesuré à l'aide d'une référence angulaire, extraire du signal temporaire le temps de passage (TOA) relatif à une aube identifiée, associer à l'aube identifié son temps de passage extrait ainsi qu'une information relative à son numéro de tour (étape E2).

Pour chaque acquisition d'un temps de passage (TOA) d'une aube, l'unité de traitement principale 711e calcule, via le module de calcul 713, une déflexion au sommet de cette aube (étape E3), c'est-à-dire l'écart spatial du sommet de l'aube 111 par rapport à une position théorique de celle-ci au repos.

Ensuite, au cours d'une étape E4, l'unité de traitement principale 711e extraie, via un module d'extraction 712 illustré sur la figure 5, la composante dynamique pour chaque déflexion calculée, c'est-à-dire l'isolent de la composante statique. L'extraction de la composante dynamique est réalisée à l'aide de méthodes d'isolation connues de l'état de l'art (ex : moyenne, ou utilisation d'un filtre passe haut pour extraire une composante haute fréquence).

L'unité de traitement principale 711e réalise en outre, via un module de sélection 714, une étape de sélection S d'une ou plusieurs plages de régime du moteur 10 pour lesquelles l'ensemble des aubes de la roue aubagée 11 sont supposées synchrones, c'est-à-dire supposées présenter un même comportement vibratoire pour une même plage de régime du moteur 10. Les plages de régime du moteur 10 sont ici pré-identifiées par rapport à une base de données de référence, par exemple la base de données D1, comme garantissant que l'ensemble des aubes présentent un même comportement vibratoire lorsqu'elles passent au droit du capteur tip-timing 71 ou 72.

En vue d'identifier un éventuel endommagement d'une ou plusieurs aubes pour chaque plage de régime du moteur 10 sélectionnée au cours de l'étape de sélection S, les moyens de traitement 11 comprennent en outre un module de traitement 715 prenant pour entrées les composantes dynamiques sélectionnées par le module de sélection 714.

Le module de traitement 715 est configuré pour déterminer (étape E5) une éventuelle variation du comportement dynamique de chaque aube, en déterminant une variation des composantes dynamiques de chaque aube, et en mettant ces variations en relation avec une base de données référentielle. Les résultats de l'étape de détermination E5 sont de plus ajoutés à la base de données de suivi, ici la base de données D2. Ainsi, l'étape de détermination E5 peut être vue comme une étape d'analyse du comportement dynamique vibratoire de chaque aube pour chaque plage de régime du moteur sélectionnée au cours de l'étape de sélection S.

L'unité de traitement principale 711e procède ensuite, via un comparateur 716, à une étape de comparaison E6 suite à l'étape de détermination E5. L'étape de comparaison E6 consiste à comparer chaque variation détectée d'une composante dynamique de la déflexion d'une aube 111, c'est-à-dire chaque variation de son comportement dynamique, avec un ou plusieurs seuils préenregistrés dans la base de données D1 référentielle.

Au cours de cette étape E6, chaque variation de composante dynamique, donc de comportement dynamique, détectée pour une aube 111 est notamment comparée à un premier seuil de variation, qui correspond indirectement à un état de santé de l'aube. Ce premier seuil est lié à un deuxième seuil qui concerne la variation de la fréquence propre de l'aube 111, l'atteinte de ce seuil correspondant à un endommagement de l'aube 111.

Les premier et deuxième seuils ont été déterminés puis enregistrés dans la base de données D1 référentielle au cours d'une phase d'apprentissage E9 initiale.

La détection d'une variation de la composante dynamique de la déflexion de l'aube 111, c'est à dire la variation de son comportement dynamique, est donc ici liée à la détection indirecte d'une dérive de la fréquence propre de cette aube 111, cette dérive au-delà d'un seuil prédéterminé traduisant un endommagement de celle-ci.

Ainsi, si la variation de la composante dynamique de la déflexion/du comportement dynamique de l'aube 111 est supérieure au premier seuil de variation, cela signifie que la fréquence propre de l'aube 111 présente elle-même une dérive traduisant un endommagement de l'aube 111. En effet, un endommagement de l'aube 111 conduit à une dérive de sa fréquence propre et donc à une dérive de la composante dynamique de sa déflexion.

Par conséquent, lorsque le comparateur 716 détecte que la variation de la composante dynamique de la déflexion/du comportement dynamique de l'aube 111 est supérieure ou égale au premier seuil, l'aube 111 est identifiée (étape E7) comme endommagée.

Une alarme indiquant l'endommagement de l'aube 111 est alors émise (étape E8) à destination des moyens d'alertes 9 (via par exemple, des moyens sonores et/ou de visualisation). De même, des messages à envoyer ou à tenir à disposition de la maintenance peuvent être déclenchés au cours de l'émission de l'alarme.

**Revendications**

1. Procédé de surveillance de la torsion d'un arbre rotatif (19) sur une turbomachine (10) d'un aéronef à partir des mesures de capteurs (71 à 76) répartis le long de l'arbre rotatif (19) pour diviser l'arbre en segments d'arbre, le procédé comprenant :

   - une étape, pour chaque capteur, de mesure d'un paramètre dépendant de la rotation de l'arbre,
   - une étape, pour chaque couple de capteurs réalisable, de calcul d'un paramètre lié à la torsion de l'arbre,
   - une étape de comparaison des différents paramètres liés à la torsion de l'arbre calculés à des références,
   - une étape de détection d'un endommagement sur un segment d'arbre à l'issue de l'étape de comparaison, et

   **caractérisé en ce que** le procédé utilise des mesures d'au moins trois capteurs (71 à 76) répartis le long de l'arbre rotatif (19) pour diviser l'arbre en au moins deux segments d'arbre, et **en ce que** le procédé comprend en outre une étape d'indication de la localisation de l'endommagement sur l'arbre à partir du segment d'arbre pour lequel un endommagement a été détecté.

2. Procédé de surveillance de la torsion d'un arbre rotatif selon la revendication 1, dans lequel au moins l'un des capteurs utilisé pour localiser l'endommagement est un capteur monté à demeure sur la turbomachine.

3. Procédé de surveillance de la torsion d'un arbre rotatif selon l'une des revendications 1 ou 2, comprenant une étape préalable d'installation d'au moins un capteur modulaire autonome amovible, au moins l'un des capteurs utilisés pour localiser l'endommagement étant un capteur modulaire, autonome et amovible.

4. Ensemble de surveillance de la torsion d'un arbre rotatif sur une turbomachine d'un aéronef, l'ensemble comprenant :

   - des capteurs de mesure d'un paramètre dépendant de la rotation de l'arbre, lesdits capteurs étant répartis le long de l'arbre rotatif pour diviser l'arbre en segments d'arbre,
   - des moyens de calcul configurés pour calculer un paramètre lié à la torsion de l'arbre pour chaque couple de capteurs réalisable,
   - des moyens de comparaison configurés pour comparer les différents paramètres liés à la torsion de l'arbre calculés à des références,
   - des moyens de détection d'un endommagement sur un segment d'arbre à partir des informations transmises par les moyens de comparaison, et **caractérisé en ce qu'**il comprend :
   - au moins trois capteurs de mesure d'un paramètre dépendant de la rotation de l'arbre, lesdits capteurs étant répartis le long de l'arbre rotatif pour diviser l'arbre en au moins deux segments d'arbre, et
   - des moyens d'indication de la localisation de l'endommagement sur l'arbre configurer pour indiquer le segment endommager à partir de l'indication du segment d'arbre pour lequel un endommagement a été detecté par les moyens de détection.

5. Ensemble de surveillance de la torsion d'un arbre rotatif selon la revendication 4, dans lequel l'un des capteurs utilisés pour localiser l'endommagement est un capteur modulaire et autonome et amovible.

6. Ensemble de surveillance de la torsion d'un arbre rotatif selon l'une des revendications 4 ou 5, dans lequel chaque capteur est choisi parmi les capteurs magnétiques, les capteurs acoustiques, les capteurs capacitifs et les capteurs optiques.

7. Turbomachine (10) **caractérisée en ce qu'**elle comprend un ensemble (1) de surveillance de la torsion d'un arbre rotatif selon l'une des revendications 4 à 6, la turbomachine (10) comprenant un logement (70) et une trappe d'accès audit logement (70) pour chaque capteur.

8. Turbomachine (10) selon la revendication 7, dans lequel au moins l'un des capteurs est un capteur monté à demeure sur la turbomachine (10).

9. Aéronef comprenant au moins une turbomachine (10) selon l'une des revendications 7 ou 8.

**Patentansprüche**

1. Verfahren zur Überwachung der Torsion einer rotierenden Welle (19) an einer Turbomaschine (10) eines Flugzeugs anhand von Messungen von Sensoren (71 bis 76), die entlang der rotierenden Welle (19) verteilt sind, um die Welle in Wellensegmente zu unterteilen, wobei das Verfahren umfasst:

   - für jeden Sensor einen Schritt des Messens eines Parameters, der von der Rotation der Welle abhängt,
   - für jedes realisierbare Sensorpaar einen Schritt des Berechnens eines Parameters, der mit der Torsion der Welle zusammenhängt,
   - einen Schritt des Vergleichens der verschiedenen berechneten Parameter, die mit der Torsion der Welle zusammenhängen, mit Referenzen,
   - einen Schritt des Erfassens einer Beschädigung an einem Wellensegment nach Abschluss des Vergleichsschritts, und

   **dadurch gekennzeichnet, dass** das Verfahren Messungen von mindestens drei Sensoren (71 bis 76) verwendet, die entlang der rotierenden Welle (19) verteilt sind, um die Welle in mindestens zwei Wellensegmente zu unterteilen, und dass das Verfahren ferner einen Schritt des Anzeigens der Lokalisierung der Beschädigung an der Welle anhand des Wellensegments, für das eine Beschädigung festgestellt wurde, umfasst.

2. Verfahren zur Überwachung der Torsion einer rotierenden Welle nach Anspruch 1, wobei mindestens einer der zur Lokalisierung der Beschädigung verwendeten Sensoren ein auf Dauer an der Turbomaschine angebrachter Sensor ist.

3. Verfahren zur Überwachung der Torsion einer rotierenden Welle nach einem der Ansprüche 1 oder 2, umfassend einen vorherigen Schritt der Installation mindestens eines abnehmbaren autonomen modularen Sensors, wobei mindestens einer der zur Lokalisierung der Beschädigung verwendeten Sensoren ein abnehmbarer, autonomer und modularer Sensor ist.

4. Anordnung zur Überwachung der Torsion einer rotierenden Welle an einer Turbomaschine eines Flugzeugs, wobei die Anordnung umfasst:

   - Sensoren zum Messen eines Parameters, der von der Rotation der Welle abhängt, wobei die Sensoren entlang der rotierenden Welle verteilt sind, um die Welle in Wellensegmente zu unterteilen,
   - Berechnungsmittel, die so konfiguriert sind, dass sie einen Parameter, der mit der Torsion der Welle zusammenhängt, für jedes realisierbare Sensorpaar berechnen,
   - Vergleichsmittel, die so konfiguriert sind, dass sie die verschiedenen berechneten Parameter, die mit der Torsion der Welle zusammenhängen, mit Referenzen vergleichen,
   - Mittel zum Erkennen einer Beschädigung an einem Wellensegment anhand der von den Vergleichsmitteln übermittelten Informationen, und

**dadurch gekennzeichnet, dass** sie umfasst:

- mindestens drei Sensoren zum Messen eines Parameters, der von der Rotation der Welle abhängt, wobei die Sensoren entlang der rotierenden Welle verteilt sind, um die Welle in mindestens zwei Wellensegmente zu unterteilen, und
- Mittel zum Anzeigen der Lokalisierung der Beschädigung an der Welle, die so konfiguriert sind, dass sie das beschädigte Segment anhand der Anzeige des Wellensegments anzeigen, für das eine Beschädigung von den Anzeigemitteln festgestellt wurde.

5. Anordnung zur Überwachung der Torsion einer rotierenden Welle nach Anspruch 4, wobei einer der Sensoren, die zur Lokalisierung der Beschädigung verwendet werden, ein modularer und autonomer und abnehmbarer Sensor ist.

6. Anordnung zur Überwachung der Torsion einer rotierenden Welle nach einem der Ansprüche 4 oder 5, wobei jeder Sensor aus den magnetischen Sensoren, den akustischen Sensoren, den kapazitiven Sensoren und den optischen Sensoren ausgewählt ist.

7. Turbomaschine (10), **dadurch gekennzeichnet, dass** sie eine Anordnung (1) zur Überwachung der Torsion einer rotierenden Welle nach einem der Ansprüche 4 bis 6 umfasst, wobei die Turbomaschine (10) eine Aufnahme (70) und eine Zugangsklappe zu der Aufnahme (70) für jeden Sensor umfasst.

8. Turbomaschine (10) nach Anspruch 7, wobei mindestens einer der Sensoren ein auf Dauer an der Turbomaschine (10) angebrachter Sensor ist.

9. Luftfahrzeug, das mindestens eine Turbomaschine (10) nach einem der Ansprüche 7 oder 8 umfasst.

**Claims**

1. A method for monitoring the torsion of a rotary shaft (19) on an aircraft turbomachine (10) based on the measurements from sensors (71 to 76) distributed along the rotary shaft (19) to divide the shaft into shaft segments, the method comprising:

- a step of measuring, for each sensor, a parameter dependent on the rotation of the shaft,
- a step of calculating, for each achievable pair of sensors, a parameter related to the torsion of the shaft,
- a step of comparing the different calculated parameters related to the torsion of the shaft with references,
- a step of detecting damage on a shaft segment at the end of the comparison step, and

**characterized in that** the method uses measures from at least three sensors (71 to 76) distributed along the rotary shaft (19) to divide the shaft into at least two shaft segments, and **in that** the method further comprises a step of indicating the localization of the damage on the shaft from the shaft segment for which damage has been detected.

2. The method for monitoring the torsion of a rotary shaft according to claim 1, wherein at least one of the sensors used to localize the damage is a sensor permanently mounted on the turbomachine.

3. The method for monitoring the torsion of a rotary shaft according to any of claims 1 or 2, comprising a preliminary step of installing at least one removable autonomous modular sensor, at least one of the sensors used to localize the damage being a modular, autonomous and removable sensor.

4. An assembly for monitoring the torsion of a rotary shaft on an aircraft turbomachine, the assembly comprising:

- the sensors for measuring a parameter dependent on the rotation of the shaft, said sensors being distributed along the rotary shaft to divide the shaft into shaft segments,
- calculation means configured to calculate a parameter related to the torsion of the shaft for each achievable pair of sensors,
- comparison means configured to compare the different calculated parameters related to the torsion of the shaft with references,

- means for detecting damage on a shaft segment from the information transmitted by the comparison means, and

**characterized in that** it comprises

- at least three sensors for measuring a parameter dependent on the rotation of the shaft, said sensors being distributed along the rotary shaft to divide the shaft into at least two shaft segments, and
- means for indicating the localization of the damage on the shaft configured to indicate the damaged segment from the indication of the shaft segment for which damage has been detected by the detection means.

5. The assembly for monitoring the torsion of a rotary shaft according to claim 4, wherein one of the sensors used to localize the damage is a modular, autonomous and removable sensor.

6. The assembly for monitoring the torsion of a rotary shaft according to any of claims 4 or 5, wherein each sensor is chosen among the magnetic sensors, the acoustic sensors, the capacitive sensors and the optical sensors.

7. A turbomachine (10) configured to receive an assembly (1) for monitoring the torsion of a rotary shaft according to any of claims 4 to 6, the turbomachine (10) comprising a housing (70) and a hatch for accessing said housing (70) for each sensor.

8. The turbomachine (10) according to claim 7, wherein at least one of the sensors is a sensor permanently mounted on the turbomachine (10).

9. An aircraft comprising at least one turbomachine (10) according to any of claims 7 or 8.

[Fig. 1]

100     Mesure

110     Calcul

120     Comparaison aux références

130     Détection

140     Indication de la localisation

[Fig.2]

[Fig.3]

[Fig. 4]

[Fig. 5]

[Fig. 6]

[Fig. 7]

**200**

| Détection des aubes de la première roue |

**210**

| Détection des aubes de la  seconde roue |

| Calcul des intervalles de temps | —220

| Détermination de la position angulaire | —230

| Désignation d'une référence angulaire | —240

[Fig. 8]

```
┌─────────────────────────────┐
│   Mesure régime moteur       │──E1
└─────────────────────────────┘
            │
            ▼
┌─────────────────────────────┐
│      Acquisition TOA         │──E2
└─────────────────────────────┘
            │
            ▼
┌─────────────────────────────┐
│      Calcul déflexion        │──E3
└─────────────────────────────┘
            │
            ▼
┌─────────────────────────────┐
│   Extraction composante      │──E4
│        dynamique             │
└─────────────────────────────┘
            │
            ▼
┌─────────────────────────────┐
│  Sélection d'une plage de régime │──S
└─────────────────────────────┘
            │
            ▼
┌─────────────────────────────┐
│   Détermination variation    │- - - - - - ┐
│                              │──E5         │
└─────────────────────────────┘             │
            │                                ▼
            ▼                      ┌─────────────────┐
┌─────────────────────────────┐   │  Apprentissage   │
│        Comparaison           │──E6 └─────────────────┘
└─────────────────────────────┘             E9
            │
            ▼
┌─────────────────────────────┐
│       Identification         │──E7
└─────────────────────────────┘
            │
            ▼
┌─────────────────────────────┐
│          Alarme              │──E8
└─────────────────────────────┘
```

**EP 4 058 772 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2893158 A
- EP 1980719 A
- FR 2995018
- FR 3071919